# EUROPEAN PATENT SPECIFICATION

(11) **EP 4 239 783 B1**
(45) Date of publication and mention of the grant of the patent: **16.04.2025**
(21) Application number: 23156003.8
(22) Date of filing: 10.02.2023
(51) Int. Cl.: H01M 50/569, H01M 10/48, H01M 50/507, H01M 50/519, H01M 50/209

(54) **BATTERY CONNECTION MODULE**
BATTERIEANSCHLUSSMODUL
MODULE DE CONNEXION DE BATTERIE

(30) Priority: 14.02.2022 CN 202210134466
(43) Date of publication of application: 06.09.2023
(73) Proprietor: Molex, LLC, Lisle, IL 60532 (US)
(72) Inventor: LI, Yun-Jin, ChengDu (CN); LIM, Kian Heng, Jurong Town (SG); LIN, Yong, ChengDu (CN); ZENG, Shang Xiu, ChengDu (CN)
(74) Representative: Ter Meer Steinmeister & Partner

(56) References cited:
- EP-A1- 2 736 092
- EP-A1- 3 800 729
- CN-A- 111 435 723

## Description

### TECHNICAL FIELD

The present disclosure relates to the field of battery technology, and particularly relates to a battery connection module.

### BACKGROUND

Chinese patent application publication No. CN111435723A discloses a battery connection module, in which a first end portion of a temperature collecting piece formed with an opening, a temperature sensing member is positioned in the opening, the other end of the temperature collecting piece is connected on a busbar.

However, the busbar disclosed by the prior art patent application connects electrodes of batteries, heat generated by the batteries will be directly transferred to the busbar, and the heat on the busbar will be transferred to the temperature sensing member at the first end portion of the temperature collecting piece via the temperature collecting piece, there is only one heat transferring path. If the temperature sensing member is provided between an upper surface of a circuit board and the below batteries and is spaced apart from the batteries by the circuit board and a tray, the heat transferring path is longer, which results in accuracy of temperature information collected by the temperature sensor lower and temperature response time longer, and results in sensitivity of temperature information collection poor.

### SUMMARY

One main object of the present disclosure is to provide a battery connection module in which a heat transferring path between a temperature sensor and a surface of a side of a circuit board opposite to temperature sensor is shortened so as to overcome at least one deficiency of the above prior art.

The object is solved by the features of the independent claims. Preferred embodiments are given in the dependent claims.

In order to realize the above object, the present disclosure employs the following technical solution: according to one aspect of the present disclosure, a battery connection module is provided, the battery connection module is used to connect a plurality of batteries, the battery connection module comprises a tray, a plurality of busbars, a circuit board and a temperature measuring assembly; the plurality of busbars are mounted on the tray and are used to connect the plurality of batteries; the circuit board is connected to the plurality of busbars; the a temperature measuring assembly comprises a first thermal conduction pad and a second thermal conduction pad, a plurality of first thermal conduction through-holes, a temperature sensor and a bridging piece; the first thermal conduction pad and a second thermal conduction pad are respectively provided to an upper surface and a lower surface of the circuit board; the plurality of first thermal conduction through-holes penetrate the first thermal conduction pad, the second thermal conduction pad and the circuit board; the temperature sensor is provided to the upper surface or the lower surface of the circuit board and is adjacent to the first thermal conduction pad or the second thermal conduction pad; the bridging piece connects the corresponding busbar and the first thermal conduction pad or the second thermal conduction pad.

According to one or more of the embodiments, the temperature sensor may be provided to the upper surface of the circuit board and/or may be adjacent to the first thermal conduction pad.

In one or more of the embodiments, a first end of the bridging piece may be connected to the first thermal conduction pad.

In one or more of the embodiments, a second end of the bridging piece may be connected to the corresponding busbar.

According to one or more of the embodiments, the temperature measuring assembly may further comprise a packaging cover.

In one or more of the embodiments, the packaging cover may be provided to the upper surface of the circuit board and/or may be used to at least partially package the first thermal conduction pad, the temperature sensor and/or the first end of the bridging piece.

According to one or more of the embodiments, the first thermal conduction pad may be provided with a first receiving opening.

In one or more of the embodiments, the first end of the bridging piece may be provided with a second receiving opening.

In one or more of the embodiments, the first receiving opening may correspond to the second receiving opening in position.

In one or more of the embodiments, the temperature sensor may be at least partially positioned in a range of the first receiving opening and in a range of the second receiving opening.

According to one or more of the embodiments, the temperature sensor may be provided to the lower surface of the circuit board and/or may be adjacent to the second thermal conduction pad.

In one or more of the embodiments, a first end of the bridging piece may be connected to the first thermal conduction pad.

In one or more of the embodiments, a second end of the bridging piece may be connected to the corresponding busbar.

According to one or more of the embodiments, the temperature measuring assembly may further comprise a packaging cover, the packaging cover may be provided to the lower surface of the circuit board and/or may be used to at least partially package the second thermal conduction pad, the temperature sensor and/or the plurality of first thermal conduction through-holes.

According to one or more of the embodiments, the second thermal conduction pad may be provided with a third receiving opening.

In one or more of the embodiments, the temperature sensor may be at least partially positioned in a range of the third receiving opening.

According to one or more of the embodiments, the circuit board may be provided with an electrical connecting point.

In one or more of the embodiments, the temperature sensor may be mounted to the electrical connecting point.

In one or more of the embodiments, the temperature measuring assembly may further comprise a second thermal conduction through-hole.

In one or more of the embodiments, the second thermal conduction through-hole may penetrate the electrical connecting point and the circuit board.

According to one or more of the embodiments, the electrical connecting point may be a welding pad.

In one or more of the embodiments, the temperature sensor may be mounted to the welding pad by a weld manner.

In one or more of the embodiments, the temperature measuring assembly may further comprise a third thermal conduction pad.

In one or more of the embodiments, one of the third thermal conduction pad and the welding pad may be provided to the upper surface of the circuit board.

In one or more of the embodiments, the other of the third thermal conduction pad and the welding pad may be provided to the lower surface of the circuit board.

In one or more of the embodiments, the second thermal conduction through-hole may further penetrate the third thermal conduction pad.

According to one or more of the embodiments, the tray may be provided with an opening.

In one or more of the embodiments, the opening may correspond to the second thermal conduction pad and the temperature sensor in position.

As can be seen from the above technical solutions, advantages and positive effects of the battery connection module proposed by the present disclosure lie in that: the battery connection module proposed by the present disclosure includes a tray, a plurality of busbars, a circuit board and a temperature measuring assembly. The temperature measuring assembly includes a first thermal conduction pad and a second thermal conduction pad, a plurality of first thermal conduction through-holes, a temperature sensor and a bridging piece. The first thermal conduction pad and the second thermal conduction pad are respectively provided to an upper surface and a lower surface of the circuit board. The plurality of first thermal conduction through-holes penetrate the first thermal conduction pad, the second thermal conduction pad and the circuit board. The temperature sensor is provided to an upper surface or a lower surface of the circuit board, and is adjacent to the first thermal conduction pad or the second thermal conduction pad. By the above design, the present disclosure can allow heat at a surface of a side of the circuit board opposite to temperature sensor to be transferred to the temperature sensor via the first thermal conduction pad, the second thermal conduction pad and the first thermal conduction through-hole, heat transferring path is shortened, accuracy of temperature collection of the temperature sensor is promoted, and temperature response time is shortened, sensitivity of temperature information collection is promoted.

### BRIEF DESCRIPTION OF THE DRAWINGS

Various purpose, features and advantages of the present disclosure will be apparent from considering the detailed description of preferred embodiments of the present disclosure in combination with the drawings. The drawings are only exemplary illustrations of the present disclosure and are not necessarily drawn to scale. In the drawings, the same reference numeral always indicates the same or similar element. In the drawings:
FIG. 1 is an exploded schematic view of a battery pack according to an exemplary embodiment;
FIG. 2 is an exploded schematic view of a battery connection module of FIG. 1;
FIG. 3 is a partially enlarged schematic view when the battery connection module and a plurality of batteries of the battery pack of FIG. 1 are assembled;
FIG. 4 is an exploded schematic view of FIG. 3;
FIG. 5 is a partially enlarged schematic view of FIG. 3 indicated by a dotted-line frame A;
FIG. 6 is an exploded schematic view of FIG. 5;
FIG. 7 is a partial bottom view of FIG. 3;
FIG. 8 is a partially enlarged schematic view of the battery connection module in another exemplary embodiment;
FIG. 9 is an exploded schematic view of FIG. 8;
FIG. 10 is an exploded schematic view of FIG. 8 viewed from another angle;
FIG. 11 is a partial cross sectional view of FIG. 8.

### Reference numerals are presented as follows:

| | | | |
|---|---|---|---|
| 100 | battery connection module | 45b | second end |
| 110 | tray | 45c | penetrating hole |
| 111 | opening | 451 | second receiving opening |
| 120 | busbar | 46 | packaging cover |
| 130 | circuit board | 47 | second thermal conduction through-hole |
| 141 | first thermal conduction pad | 48 | welding pad |
| 1411 | first receiving opening | 49 | third thermal conduction pad |
| 142 | second thermal conduction pad | 200 | battery |
| 1421 | third receiving opening | 300 | end plate |
| 143 | first thermal conduction through-hole | S1 | upper surface |
| 144 | temperature sensor | S2 | lower surface |
| 145 | bridging piece | | |
| 145a | first end | | |

### DETAILED DESCRIPTION

Typical embodiments embodying the features and advantages of the present disclosure will be described in detail in the following description. It should be understood that the present disclosure can have various changes in different embodiments, which are not departed from the scope of the present disclosure, and the descriptions and drawings thereof are for illustrative purposes in essence and are not for limiting the present disclosure.

In the following description of different exemplary embodiments of the present disclosure, reference is made to the accompanying drawings, which form a part of the present disclosure, and in which different exemplary structures, systems, and steps of aspects that may implement the present disclosure are shown by way of example. It should be understood that other specific solutions of components, structures, exemplary devices, systems, and steps may be used, and structural and functional modifications may be made without departing from the scope of the present disclosure. Moreover, although the terms "above", "between", "within", and the like may be used in this specification to describe different exemplary features and elements of the present disclosure, these terms are used herein for convenience only, for example, according to the direction of the examples illustrated in the accompanying drawings. Any content of the present specification should not be understood the structure falls within the scope of the present disclosure is required to be positioned in a specific three-dimensional direction.

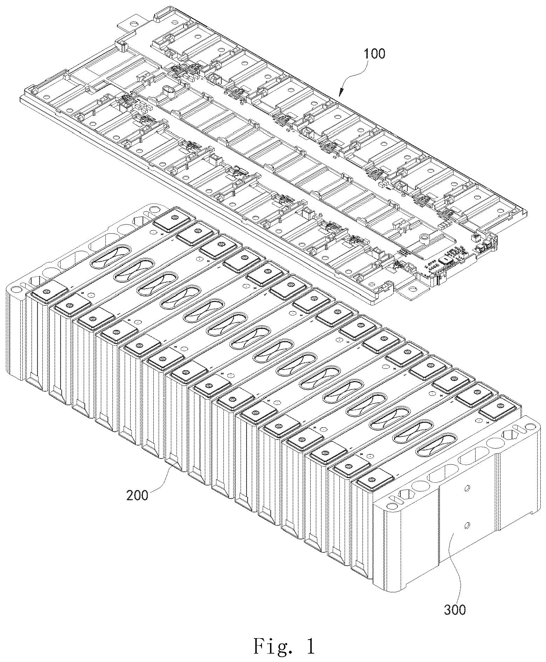

Referring to FIG. 1, FIG. 1 representatively illustrates an exploded schematic view of a battery pack proposed by the present disclosure. In the exemplary embodiment, the battery connection module 100 proposed by the present disclosure is described by taking the battery connection module 100 applied to a battery pack for example. A person skilled in the art easily understands that, in order to apply relevant design of the present disclosure to other types of energy storing devices, various modifications, additions, substitutions, deletions or other variations may be made to following specific embodiments, but these modifications, additions, substitutions, deletions or other variations are still fallen within a scope of a principle of the battery connection module 100 proposed by the present disclosure.

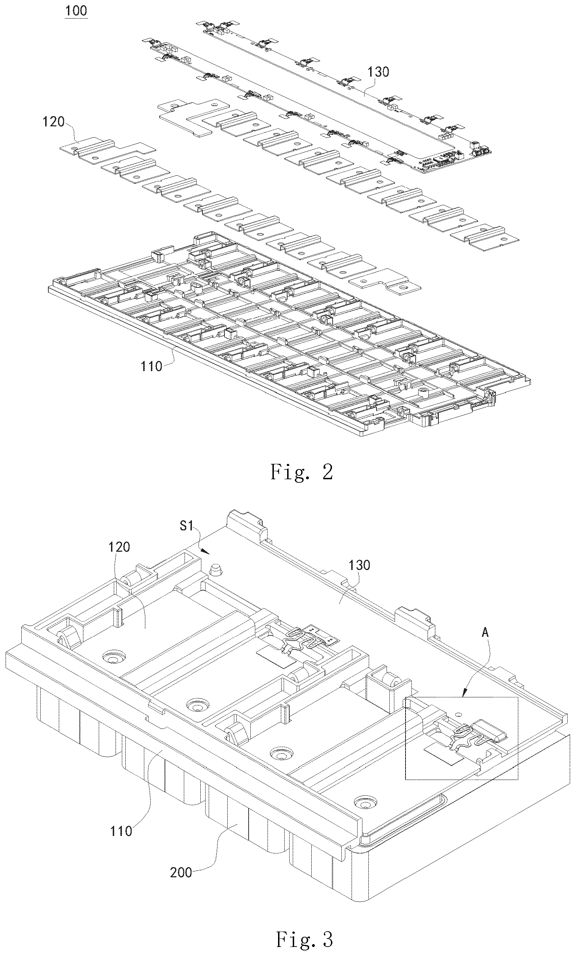

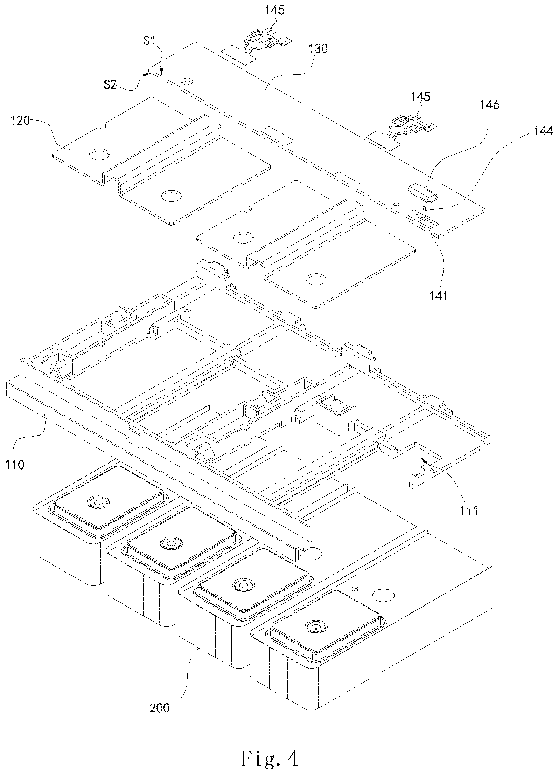

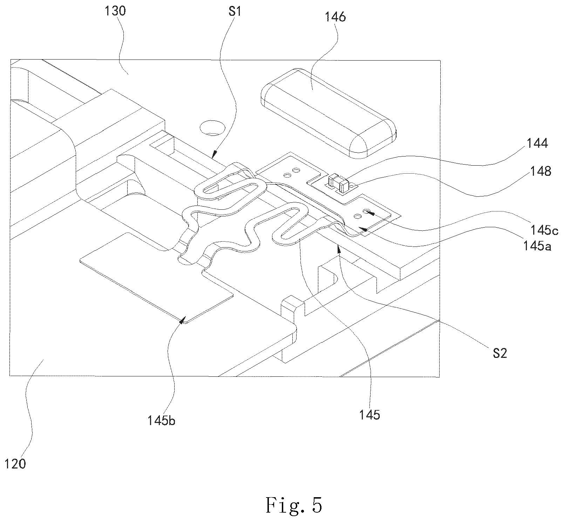

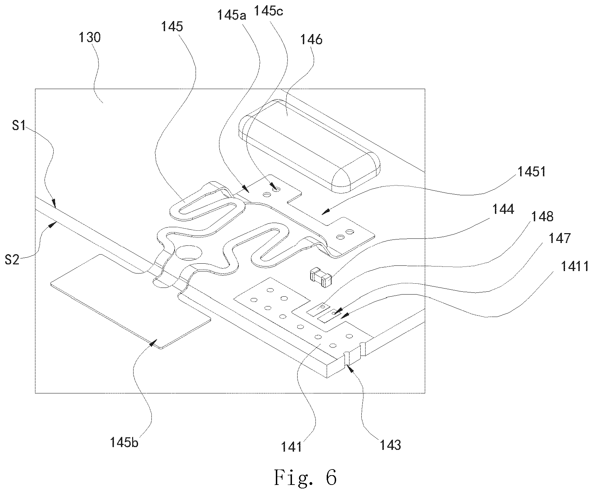

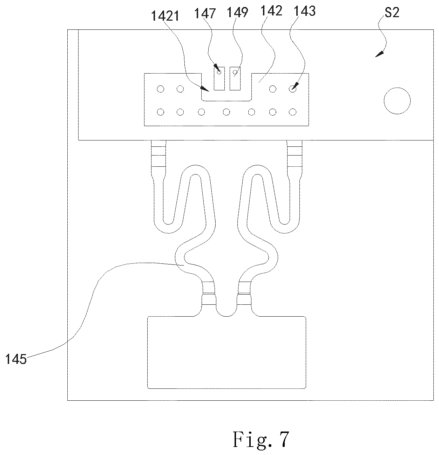

As shown in FIG. 1, in the present embodiment, the battery connection module 100 proposed by the present disclosure is provided on a plurality of batteries of a battery pack, the battery connection module 100 is used to connect the plurality of batteries 200. In combination with referring to FIG. 2 to FIG. 7, FIG. 2 representatively illustrates an exploded schematic view of the battery connection module 100, FIG. 3 representatively illustrates a partially enlarged schematic view when the battery connection module 100 and the plurality of batteries of the battery pack are assembled, FIG. 4 representatively illustrates an exploded schematic view of FIG. 3, FIG. 5 representatively illustrates a partially enlarged schematic view of FIG. 3 indicated by a dotted-line frame A, FIG. 6 representatively illustrates an exploded schematic view of FIG. 5, and FIG. 7 representatively illustrates a partial bottom view of FIG. 3. Hereinafter in combination with these figures, each main constituent part of the battery connection module 100 proposed by the present disclosure will be described in detail in structure, connecting manner and function relationship.

As shown in in FIG. 1 to FIG. 7, in an embodiment of the present disclosure, the battery connection module 100 proposed by the present disclosure includes a tray 110, a plurality of busbars 120, a circuit board 130 and a temperature measuring assembly. Specifically, the plurality of busbars 120 are mounted on the tray 110, the plurality of busbars 120 are used to connect the plurality of batteries 200. Each busbar 120 is connected to a voltage collecting wiring of the circuit board 130 via one bridging piece 145. The temperature measuring assembly includes a first thermal conduction pad 141 and a second thermal conduction pad 142, a plurality of first thermal conduction through-holes 143, a temperature sensor 144 and the bridging piece 145. The first thermal conduction pad 141 and the second thermal conduction pad 142 are respectively provided to an upper surface S1 and a lower surface S2 of the circuit board 130. The first thermal conduction through-hole 143 penetrates the first thermal conduction pad 141, the second thermal conduction pad 142 and the circuit board 130. The temperature sensor 144 is provided to the upper surface S1 of the circuit board 130 and is adjacent to the first thermal conduction pad 141. The bridging piece 145 connects the busbar 120 and the first thermal conduction pad 141. By the above design, the present disclosure can allow heat at a surface of a side of the circuit board 130 opposite to the temperature sensor 144 to be transferred to the temperature sensor 144 via the second thermal conduction pad 142, the first thermal conduction through-hole 143 and the first thermal conduction pad 141, heat transferring path is shortened, accuracy of temperature collection of the temperature sensor 144 is promoted, and temperature response time is shortened, sensitivity of temperature information collection is promoted.

As shown in FIG. 3 and FIG. 6, based on the design that the temperature sensor 144 is provided to the upper surface S1 of the circuit board 130 and is adjacent to the first thermal conduction pad 141, in an embodiment of the present disclosure, a first end 145a of the bridging piece 145 is connected to the first thermal conduction pad 141, a second end 145b of the bridging piece 145 is connected to the corresponding busbar 120.

As shown in FIG. 3 to FIG. 6, in an embodiment of the present disclosure, the first end 145a of the bridging piece 145 connects the first thermal conduction pad 141 and covers each first thermal conduction through-hole 143. The temperature measuring assembly further includes a packaging cover 146. The packaging cover 146 is provided to the upper surface S1 of the circuit board 130, is used to package the first thermal conduction pad 141, the temperature sensor 144 and the first end 145a of the bridging piece 145, and can provide a thermal conduction function and a protecting function. In some embodiments, in a construction that the plurality of the first thermal conduction through-holes 143 are not all covered by the first end 145a of the bridging piece 145, the packaging cover 146 also may cover the other first thermal conduction through-hole 143 which is exposed to the first end 145a of the bridging piece 145. In some embodiments, when the temperature sensor 144 is provided to the upper surface S1 of the circuit board 130 and the temperature measuring assembly includes the packaging cover 146, the packaging cover 146 also may partially package the first thermal conduction pad 141, in other words, in various possible embodiments which conform to the design concept of the present disclosure, when the temperature sensor 144 is provided to the upper surface S1 of the circuit board 130 and the temperature measuring assembly includes the packaging cover 146, the packaging cover 146 may at least partially package the first thermal conduction pad 141.

Based on the design that the temperature measuring assembly includes the packaging cover 146, in an embodiment of the present disclosure, a material of the packaging cover 146 may be a thermal conduction adhesive, an antioxidative protecting adhesive or a combination thereof, for example, silica gel, epoxy resin and the like.

As shown in FIG. 6, in an embodiment of the present disclosure, the first thermal conduction pad 141 is provided with a first receiving opening 1411, the first end 145a of the bridging piece 145 is provided with a second receiving opening1451, the first receiving opening 1411 and the second receiving opening1451 correspond to each other in position. On this basis, the temperature sensor 144 is partially positioned in a range of the first receiving opening 1411 and in a range of the second receiving opening1451. In some embodiments, the temperature sensor 144 also may be all positioned in the range of the first receiving opening 1411 and in the range of the second receiving opening 1451. In other words, in various possible embodiments which conform to the design concept of the present disclosure, when the temperature sensor 144 is provided to the upper surface S1 of the circuit board 130 and the first thermal conduction pad 141 is provided with the first receiving opening 1411, the temperature sensor 144 is at least partially positioned in the range of the first receiving opening 1411 and in the range of the second receiving opening1451.

As shown in FIG. 6 and FIG. 7, based on the design that the first thermal conduction pad 141 is provided with the first receiving opening 1411 and the first end 145a of the bridging piece 145 is provided with the second receiving opening1451, in an embodiment of the present disclosure, the first receiving opening 1411 is provided to a side edge of the first thermal conduction pad 141. On this basis, the second receiving opening1451 is provided to a side edge of the first end 145a of the bridging piece 145. In some embodiments, when the first receiving opening 1411 is provided to a side edge of the first thermal conduction pad 141, the second receiving opening1451 also may be provided to a middle portion of the bridging piece 145, that is, the second receiving opening1451 may be a closed opening structure. Moreover, the first receiving opening 1411 also may be provided to a middle portion of the first thermal conduction pad 141, that is, the first receiving opening 1411 may be a closed opening structure, on this basis, the second receiving opening1451 may be provided to a side edge or a middle portion of the first end 145a of the bridging piece 145, but the present disclosure is not limited thereto. In addition, when the first receiving opening 1411 is a closed opening structure, the temperature sensor 144 is all positioned in the range of the first receiving opening 1411.

In an embodiment of the present disclosure, a hole wall of the first thermal conduction through-hole 143 may be plated with a metal plating, a material of the metal plating may be cooper or cooper alloy.

In an embodiment of the present disclosure, a material of the first thermal conduction pad 141 may be the same as a material of an electrical conduction trace on the circuit board 130, for example but is not limited to cooper.

In an embodiment of the present disclosure, a material of the second thermal conduction pad 142 may be the same as a material of an electrical conduction trace on the circuit board 130, for example but is not limited to cooper.

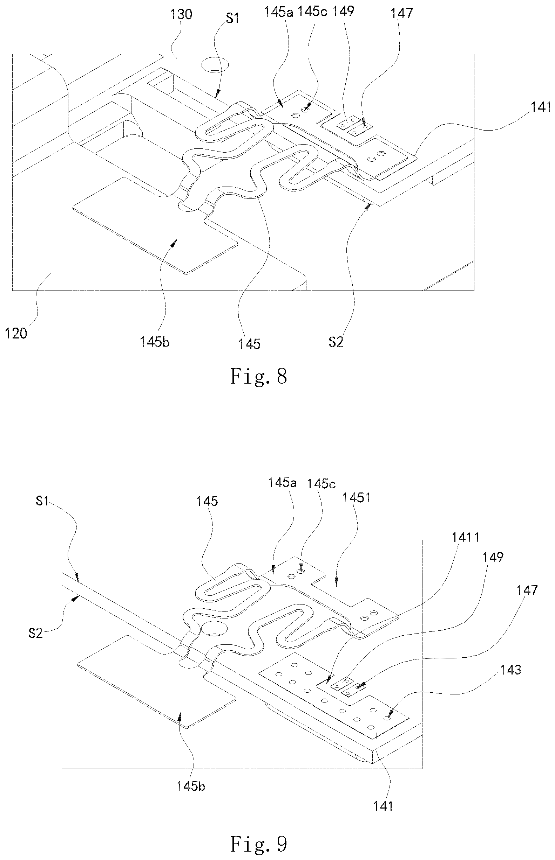

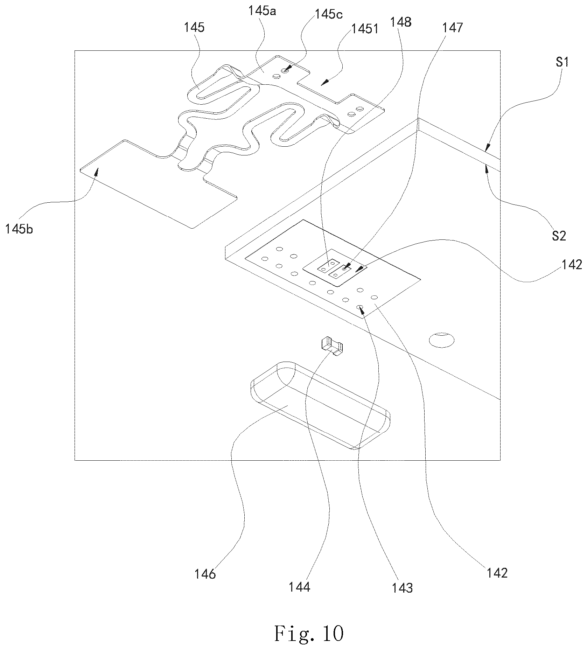

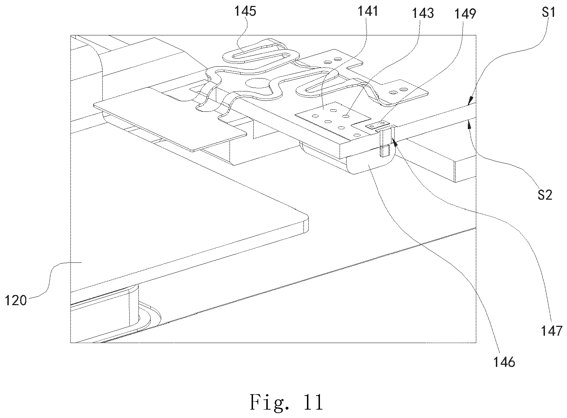

Referring to FIG. 8 to FIG. 11, FIG. 8 representatively illustrates a partially enlarged schematic view of the battery connection module 100 in another exemplary embodiment, FIG. 9 representatively illustrates an exploded schematic view of FIG. 8, FIG. 10 representatively illustrates an exploded schematic view of FIG. 8 viewed from another angle, and FIG. 11 representatively illustrates a partial cross sectional view of FIG. 8.

As shown in FIG. 8 to FIG. 11, in an embodiment of the present disclosure, the temperature sensor 144 also may be provided to the lower surface S2 of the circuit board 130 and is adjacent to the second thermal conduction pad 142. On this basis, the first end 145a of the bridging piece 145 is connected to the first thermal conduction pad 141, the second end 145b of the bridging piece 145is connected to the corresponding busbar 120. In other words, in various possible embodiments which conform to the design concept of the present disclosure, the temperature sensor 144 may be provided to the upper surface S1 or the lower surface S2 of the circuit board 130, and is adjacent to the first thermal conduction pad 141 or the second thermal conduction pad 142. On this basis, the bridging piece 145 may connect the corresponding busbar 120 and the first thermal conduction pad 141 or the bridging piece 145 may connect the corresponding busbar 120 and the second thermal conduction pad 142.

As shown in FIG. 10 and FIG. 11, in an embodiment of the present disclosure, the temperature measuring assembly further includes a packaging cover 146. The packaging cover 146 is provided to the lower surface S2 of the circuit board 130, is used to partially package the second thermal conduction pad 142, each first thermal conduction through-hole 143 and the temperature sensor 144, and can provide a thermal conduction and a protecting function. In some embodiments, when the temperature sensor 144 is provided to the lower surface S2 of the circuit board 130 and the temperature measuring assembly includes the packaging cover 146, the packaging cover 146 also may all package the second thermal conduction pad 142 and each first thermal conduction through-hole 143, in other words, in various possible embodiments which conform to the design concept of the present disclosure, when the temperature sensor 144 is provided to the lower surface S2 of the circuit board 130 and the temperature measuring assembly includes the packaging cover 146, the packaging cover 146 may at least partially package the second thermal conduction pad 142 and each first thermal conduction through-hole 143.

As shown in FIG. 10 and FIG. 11, in an embodiment of the present disclosure, the second thermal conduction pad 142 is provided with a third receiving opening 1421. On this basis, the temperature sensor 144 is all positioned in a range of the third receiving opening 1421. In some embodiments, the temperature sensor 144 also may be partially positioned in the range of the third receiving opening 1421. In other words, in various possible embodiments which conform to the design concept of the present disclosure, when the temperature sensor 144 is provided to the lower surface S2 of the circuit board 130 and the second thermal conduction pad 142 is provided with the third receiving opening 1421, the temperature sensor 144 is at least partially positioned in the range of the third receiving opening 1421.

As shown in FIG. 10 and FIG. 11, based on the design that the second thermal conduction pad 142 is provided with the third receiving opening 1421, in an embodiment of the present disclosure, the third receiving opening 1421 is provided to a middle portion of the second thermal conduction pad 142, that is, the third receiving opening 1421 is a closed opening structure, the temperature sensor 144 is all positioned in the range of the third receiving opening 1421. In some embodiments, the third receiving opening 1421 also may be provided to a side edge of the second thermal conduction pad 142, that is, the third receiving opening 1421 is an opening structure which is opened at a side edge thereof, but the present disclosure is not limited thereto. In addition, when the third receiving opening 1421 is the opening structure which is opened, the temperature sensor 144 is at least partially positioned in the range of the third receiving opening 1421.

It is noted that, in each above embodiments, description is performed by taking that the bridging piece 145 is connected to the first thermal conduction pad 141 for example. In some embodiments, whether the temperature sensor 144 is provided to the upper surface S1 or the lower surface S2 of the circuit board 130, the bridging piece 145 may connect the second thermal conduction pad 142 and the corresponding busbar 120, and so the present disclosure is not limited thereto.

As shown in FIG. 6 and FIG. 9, in an embodiment of the present disclosure, the first thermal conduction pad 141 can be connected to the voltage collecting wiring on the circuit board 130, besides the bridging piece 145 realizes an electrical connection function between the circuit board 130 and the corresponding batteries 200, the bridging piece 145 can allow heat to be transferred, by the above design, the present disclosure can allow the bridging piece 145 to transfer heat, and can allow heat transferred via the first thermal conduction through-hole 143 which penetrates the circuit board 130 to be more rapidly transferred to the temperature sensor 144.

As shown in FIG. 6 and FIG. 9, in an embodiment of the present disclosure, the temperature measuring assembly includes a plurality of first thermal conduction through-holes 143. By the above design, the present disclosure can increase thermal conduction amount by the plurality of the first thermal conduction through-holes 143. In addition, when the bridging piece 145 is also penetrated by the first thermal conduction through-hole 143, according to shape difference between the bridging piece 145 and the first thermal conduction pad 141 or the second thermal conduction pad 142, there may be some of the plurality of first thermal conduction through-holes 143 to penetrate the bridging piece 145, the first thermal conduction pad 141, the second thermal conduction pad 142 and the circuit board 130, but the other of the plurality of first thermal conduction through-holes 143 only penetrate the first thermal conduction pad 141, the second thermal conduction pad 142 and the circuit board 130.

As shown in FIG. 6 and FIG. 11, in an embodiment of the present disclosure, the circuit board 130 is provided with an electrical connecting point, the temperature sensor 144 is mounted to the electrical connecting point. On this basis, the temperature measuring assembly further includes a second thermal conduction through-hole 147. The second thermal conduction through-hole 147 penetrates the electrical connecting point and the circuit board 130. By the above design, besides the electrical connecting point realizes a function that the temperature measuring assembly is mounted and the electrical connecting point is electrically connected with the electrical conduction trace of the circuit board 130, the electrical connecting point may act as a thermal conduction member, and the second thermal conduction through-hole 147 can shorten the heat transferring path at the position of the second thermal conduction through-hole 147.

As shown in FIG. 7 and FIG. 8, based on the design that the circuit board 130 is provided with the electrical connecting point, in an embodiment of the present disclosure, the electrical connecting point is two electrical connecting points which each are a welding pad 148, the temperature sensor 144 is mounted to the welding pads 148 by a welding manner, the welding pads 148 are connected to a temperature collecting wiring on the circuit board 130. On this basis, the temperature measuring assembly further includes third thermal conduction pads 149. In the embodiment as shown in FIG. 7, the welding pad 148 is provided to the upper surface S1 of the circuit board 130, the third thermal conduction pad 149 is provided to the lower surface S2 of the circuit board 130. In the embodiment as shown in FIG. 8, the third thermal conduction pad 149 is provided to the upper surface S1 of the circuit board 130, the welding pad 148 is provided to the lower surface S2 of the circuit board 130. And, the second thermal conduction through-hole 147 further penetrates the welding pad 148 and the third thermal conduction pad 149. In other words, in various possible embodiments which conform to the design concept of the present disclosure, when the temperature measuring assembly further includes the third thermal conduction pad 149, one of the welding pad 148 and the third thermal conduction pad 149 is provided to the upper surface S1 of the circuit board 130, the other of the welding pad 148 and the third thermal conduction pad 149 is provided to of the lower surface S2 of the circuit board 130, and the second thermal conduction through-hole 147 further penetrates the welding pad 148 and the third thermal conduction pad 149.

In an embodiment of the present disclosure, a hole wall of the second thermal conduction through-hole 147 may be plated with a metal plating, a material of the metal plating may be cooper or cooper alloy.

In an embodiment of the present disclosure, a material of the third thermal conduction pad 149 may be the same as a material of the electrical conduction trace on the circuit board 130, for example but is not limited to cooper.

As shown in FIG. 4, in an embodiment of the present disclosure, a tray 110 is provided with an opening 111, the opening 111 is positioned between the lower surface S2 of the circuit board 130 and an upper surface of the corresponding battery 200. Accordingly, when the temperature sensor 144 is provided to the lower surface S2 of the circuit board 130, the opening 111 corresponds to the temperature sensor 144 in position, the opening 111 of the tray 110 can allow the temperature sensor 144 to face the corresponding battery 200 in a downward direction, so that the temperature sensor 144 can directly sense heat of the corresponding battery 200. When the temperature sensor 144 is provided to the upper surface S1 of the circuit board 130, the opening 111 corresponds to the second thermal conduction pad 142 on the lower surface S2 in position, the opening 111 of the tray 110 can allow the second thermal conduction pad 142, the third thermal conduction pad 149 and the first thermal conduction through-hole 143 on the lower surface S2 to directly face the corresponding battery 200 in the downward direction, so that the second thermal conduction pad 142, the third thermal conduction pad 149 and the first thermal conduction through-hole 143 can be directly subjected to heat so as to reflect heat of the corresponding battery 200 and transfer heat to the upper surface S1 of the temperature sensor 144.

It should be noted here that the battery connection module shown in the drawings and described in this specification are just a few examples of many kinds of battery connection modules which can employ the principle of the present disclosure. It should be clearly understood that the principle of the present disclosure is limited to any details or any components of the battery connection module shown in the drawings or described in this specification.

Examples are as follows.

In an embodiment of the present disclosure, the circuit board 130 may be a hard printed circuit board (PCB).

In an embodiment of the present disclosure, the temperature sensor 144 may be a NTC thermistor (Negative Temperature Coefficient thermistor).

In an embodiment of the present disclosure, a material of the bridging piece 145 may be nickel.

In an embodiment of the present disclosure, the first end 145a of the bridging piece 145 may connect the first thermal conduction pad 141 on the circuit board 130 by a surface welding manner, a penetrating hole 145c of the bridging piece 145 of the first end 145a acts as a welding strengthen function, the second end 145b of the bridging piece 145 may connect the corresponding busbar 120 by a ultrasonic welding manner.

In an embodiment of the present disclosure, a material of the busbar 120 may be a metal material, such as aluminum, cooper and the like, also may be a structure of a single type of metal material, a laminated structure of a plurality of types of metal materials or a combination thereof.

Based on the above detailed description of several exemplary embodiments of the battery connection module 100 proposed by the present disclosure, hereinafter an exemplary embodiment of the battery pack proposed by the present disclosure will be described.

As shown in FIG. 1, in an embodiment of the present disclosure, the battery pack proposed by the present disclosure includes the battery connection module 100 which is proposed by the present disclosure and is described in detail in the above embodiments. Here, the battery connection module 100 is provided on the plurality of batteries 200 of the battery pack, two ends of the plurality of batteries 200 are provided with frame structures, such as end plates 300 and the like, and other structure.

It should be noted here that the battery pack shown in the drawings and described in this specification are just a few examples of many kinds of battery packs which can employ the principle of the present disclosure. It should be clearly understood that the principle of the present disclosure is limited to any details or any components of the battery pack shown in the drawings or described in this specification
In conclusion, a battery connection module proposed by the present disclosure includes a tray, a plurality of busbars, a circuit board and a temperature measuring assembly. The temperature measuring assembly includes a first thermal conduction pad and a second thermal conduction pad, a plurality of first thermal conduction through-holes, a temperature sensor and a bridging piece. The first thermal conduction pad and the second thermal conduction pad are respectively provided to an upper surface and a lower surface of the circuit board. The plurality of first thermal conduction through-holes penetrate the first thermal conduction pad, the second thermal conduction pad and the circuit board. The temperature sensor is provided to an upper surface or a lower surface of the circuit board, and is adjacent to the first thermal conduction pad or the second thermal conduction pad. By the above design, the present disclosure can allow heat at a surface of a side of the circuit board opposite to temperature sensor to be transferred to the temperature sensor via the first thermal conduction pad, the second thermal conduction pad and the first thermal conduction through-hole, heat transferring path is shortened, accuracy of temperature collection of the temperature sensor is promoted, and temperature response time is shortened, sensitivity of temperature information collection is promoted.

The exemplary embodiments of the battery connection module proposed by the present disclosure are described and/or illustrated in detail above. However, the embodiments of the present disclosure are not limited to the specific embodiments described herein. On the contrary, the components and/or steps of each embodiment can be used independently and separately from other components and/or steps described herein. Each component and/or step of one embodiment may also be used in combination with other components and/or steps of other embodiments. When introducing the elements/components/etc. described and/or illustrated here, the terms "one", "a/an" and "the above" are used to indicate the existence of one or more elements/components/etc. The terms "include/includes/including", "comprise/comprises/comprising" and "has/have/having" are used to mean open inclusion and mean that there may be other elements/components/etc. besides the listed elements/components/etc. In addition, the terms "first" and "second" in the claims and the specification are used only as marks and are not as a numerical limitation on their objects.

Although the battery connection module proposed by the present disclosure has been described according to different specific embodiments, a person skilled in the art will recognize that the implementation of the present disclosure can be modified within the scope of the claims.

## Claims

1. A battery connection module (100) used to connect a plurality of batteries (200), the battery connection module (100) comprising:
a tray (110);
a plurality of busbars (120) mounted on the tray (110) and used to connect the plurality of batteries (200);
a circuit board (130) connected to the plurality of busbars (120); **characterised by**
a temperature measuring assembly comprising:
a first thermal conduction pad (141) and a second thermal conduction pad (142) respectively provided to an upper surface and a lower surface of the circuit board (130);
a plurality of first thermal conduction through-holes (143) penetrating the first thermal conduction pad (141), the second thermal conduction pad (142) and the circuit board (130);
a temperature sensor (144) which is provided to the upper surface or the lower surface of the circuit board (130) and is adjacent to the first thermal conduction pad (141) or the second thermal conduction pad (142); and
a bridging piece (145) connecting the corresponding busbar (120) and the first thermal conduction pad (141) or the second thermal conduction pad (142).

2. The battery connection module (100) according to claim 1, wherein the temperature sensor (144) is provided to the upper surface of the circuit board (130) and is adjacent to the first thermal conduction pad (141).

3. The battery connection module (100) according to claim 1 or 2, wherein a first end (145a) of the bridging piece (145) is connected to the first thermal conduction pad (141), a second end (145b) of the bridging piece (145) is connected to the corresponding busbar (120).

4. The battery connection module (100) according to any one of the claims 1-3, wherein the temperature measuring assembly further comprises a packaging cover (146) which is provided to the upper surface of the circuit board (130).

5. The battery connection module (100) according to claim 4, wherein the packaging cover (146) is used to at least partially package the first thermal conduction pad (141), the temperature sensor (144) and the first end (145a) of the bridging piece (145).

6. The battery connection module (100) according to any one of the preceding claims 2-5, wherein
the first thermal conduction pad (141) is provided with a first receiving opening (1411),
the first end (145a) of the bridging piece (145) is provided with a second receiving opening (1451),
the first receiving opening (1411) corresponds to the second receiving opening (1451) in position;
the temperature sensor (144) is at least partially positioned in a range of the first receiving opening (1411) and in a range of the second receiving opening (1451).

7. The battery connection module (100) according to any one of the preceding claims, wherein
the temperature sensor (144) provided to the lower surface of the circuit board (130) and is adjacent to the second thermal conduction pad (142),
a first end (145a) of the bridging piece (145) is connected to the first thermal conduction pad (141), a second end (145b) of the bridging piece (145) is connected to the corresponding busbar (120).

8. The battery connection module (100) according to any one of the preceding claims, wherein the temperature measuring assembly further comprises a packaging cover (146) which is provided to the lower surface of the circuit board (130) and is used to at least partially package the second thermal conduction pad (142), the temperature sensor (144) and the plurality of first thermal conduction through-holes (143).

9. The battery connection module (100) according to any one of the preceding claims, wherein the second thermal conduction pad (142) is provided with a third receiving opening (1421); wherein the temperature sensor (144) is at least partially positioned in a range of the third receiving opening (1421).

10. The battery connection module (100) according to any one of the preceding claims, wherein the circuit board (130) is provided with an electrical connecting point, the temperature sensor (144) is mounted to the electrical connecting point; the temperature measuring assembly further comprises a second thermal conduction through-hole (147) which penetrates the electrical connecting point and the circuit board (130).

11. The battery connection module (100) according to claim 10, wherein the electrical connecting point is a welding pad (148), the temperature sensor (144) is mounted to the welding pad (148) by a weld manner.

12. The battery connection module (100) according to claim 11, wherein the temperature measuring assembly further comprises a third thermal conduction pad (149), one of the third thermal conduction pad (149) and the welding pad (148) is provided to the upper surface of the circuit board (130), the other of the third thermal conduction pad (149) and the welding pad (148) is provided to the lower surface of the circuit board (130).

13. The battery connection module (100) according to claim 12, wherein the second thermal conduction through-hole (147) further penetrates the third thermal conduction pad (149).

14. The battery connection module (100) according to any one of the preceding claims, wherein the tray (110) is provided with an opening (111), the opening (111) corresponds to the second thermal conduction pad (142) and the temperature sensor (144) in position.

## Patentansprüche

1. Batterieverbindungsmodul (100), das verwendet wird, um eine Vielzahl von Batterien (200) zu verbinden, wobei das Batterieverbindungsmodul (100) umfasst:
eine Schale (110);
eine Vielzahl von Sammelschienen (120), die auf der Schale (110) angebracht sind und dazu verwendet werden, die Vielzahl von Batterien (200) zu verbinden;
eine Leiterplatte (130), die mit der Vielzahl von Sammelschienen (120) verbunden ist; **gekennzeichnet durch**
eine Temperaturmessanordnung, die Folgendes umfasst:
ein erstes Wärmeleitungspad (141) und ein zweites Wärmeleitungspad (142), die jeweils an einer oberen Oberfläche und einer unteren Oberfläche der Leiterplatte (130) bereitgestellt sind;
eine Vielzahl erster Wärmeleitungsdurchgangslöcher (143), die das erste Wärmeleitungspad (141), das zweite Wärmeleitungspad (142) und die Leiterplatte (130) durchdringen;
einen Temperatursensor (144), der an der oberen Oberfläche oder der unteren Oberfläche der Leiterplatte (130) bereitgestellt ist und an das erste Wärmeleitungspad (141) oder das zweite Wärmeleitungspad (142) angrenzt; und
ein Überbrückungsstück (145), das die entsprechende Sammelschiene (120) und das erste Wärmeleitungspad (141) oder das zweite Wärmeleitungspad (142) verbindet.

2. Batterieverbindungsmodul (100) nach Anspruch 1, wobei der Temperatursensor (144) an der oberen Oberfläche der Leiterplatte (130) bereitgestellt ist und an das erste Wärmeleitungspad (141) angrenzt.

3. Batterieverbindungsmodul (100) nach Anspruch 1 oder 2, wobei ein erstes Ende (145a) des Überbrückungsstücks (145) mit dem ersten Wärmeleitungspad (141) verbunden ist und ein zweites Ende (145b) des Überbrückungsstücks (145) mit der entsprechenden Sammelschiene (120) verbunden ist.

4. Batterieverbindungsmodul (100) nach einem der Ansprüche 1-3, wobei die Temperaturmessanordnung weiter eine Packungsabdeckung (146) umfasst, die an der oberen Oberfläche der Leiterplatte (130) bereitgestellt ist.

5. Batterieverbindungsmodul (100) nach Anspruch 4, wobei die Packungsabdeckung (146) dazu verwendet wird, das erste Wärmeleitungspad (141), den Temperatursensor (144) und das erste Ende (145a) des Überbrückungsstücks (145) mindestens teilweise zu verpacken.

6. Batterieverbindungsmodul (100) nach einem der vorstehenden Ansprüche 2-5, wobei
das erste Wärmeleitungspad (141) mit einer ersten Aufnahmeöffnung (1411) versehen ist,
das erste Ende (145a) des Überbrückungsstücks (145) mit einer zweiten Aufnahmeöffnung (1451) versehen ist,
die erste Aufnahmeöffnung (1411) in Position der zweiten Aufnahmeöffnung (1451) entspricht;
der Temperatursensor (144) mindestens teilweise in einem Bereich der ersten Aufnahmeöffnung (1411) und in einem Bereich der zweiten Aufnahmeöffnung (1451) positioniert ist.

7. Batterieverbindungsmodul (100) nach einem der vorstehenden Ansprüche, wobei
der Temperatursensor (144) an der unteren Oberfläche der Leiterplatte (130) bereitgestellt ist und an das zweite Wärmeleitungspad (142) angrenzt,
ein erstes Ende (145a) des Überbrückungsstücks (145) mit dem ersten Wärmeleitungspad (141) verbunden ist, ein zweites Ende (145b) des Überbrückungsstücks (145) mit der entsprechenden Sammelschiene (120) verbunden ist.

8. Batterieverbindungsmodul (100) nach einem der vorstehenden Ansprüche, wobei die Temperaturmessanordnung weiter eine Packungsabdeckung (146) umfasst, die an der unteren Oberfläche der Leiterplatte (130) bereitgestellt ist und dazu verwendet wird, das zweite Wärmeleitungspad (142), den Temperatursensor (144) und die Vielzahl erster Wärmeleitdurchgangslöcher (143) mindestens teilweise zu verpacken.

9. Batterieverbindungsmodul (100) nach einem der vorstehenden Ansprüche, wobei das zweite Wärmeleitungspad (142) mit einer dritten Aufnahmeöffnung (1421) versehen ist; wobei der Temperatursensor (144) mindestens teilweise in einem Bereich der dritten Aufnahmeöffnung (1421) positioniert ist.

10. Batterieverbindungsmodul (100) nach einem der vorstehenden Ansprüche, wobei die Leiterplatte (130) mit einem elektrischen Verbindungspunkt versehen ist, der Temperatursensor (144) an dem elektrischen Verbindungspunkt angebracht ist; die Temperaturmessanordnung weiter ein zweites Wärmeleitungsdurchgangsloch (147) umfasst, das den elektrischen Verbindungspunkt und die Leiterplatte (130) durchdringt.

11. Batterieverbindungsmodul (100) nach Anspruch 10, wobei der elektrische Verbindungspunkt ein Schweißpad (148) ist, der Temperatursensor (144) durch eine Schweißart an dem Schweißpad (148) angebracht ist.

12. Batterieverbindungsmodul (100) nach Anspruch 11, wobei die Temperaturmessanordnung weiter ein drittes Wärmeleitungspad (149) umfasst, wobei eines des dritten Wärmeleitungspads (149) und des Schweißpads (148) an der oberen Oberfläche der Leiterplatte (130) bereitgestellt ist und das andere des dritten Wärmeleitungspads (149) und des Schweißpads (148) an der unteren Oberfläche der Leiterplatte (130) bereitgestellt ist.

13. Batterieverbindungsmodul (100) nach Anspruch 12, wobei das zweite Wärmeleitungsdurchgangsloch (147) weiter das dritte Wärmeleitungspad (149) durchdringt.

14. Batterieverbindungsmodul (100) nach einem der vorstehenden Ansprüche, wobei die Schale (110) mit einer Öffnung (111) bereitgestellt ist, wobei die Öffnung (111) in Position dem zweiten Wärmeleitungspad (142) und dem Temperatursensor (144) entspricht.

## Revendications

1. Module de connexion de batterie (100) utilisé pour connecter une pluralité de batteries (200), le module de connexion de batterie (100) comprenant :
un plateau (110) ;
une pluralité de barres omnibus (120) montées sur le plateau (110) et utilisées pour connecter la pluralité de batteries (200) ;
une carte de circuit imprimé (130) connectée à la pluralité de barres omnibus (120) ; **caractérisée par**
un ensemble de mesure de température comprenant :
une première pastille de conduction thermique (141) et une deuxième pastille de conduction thermique (142) respectivement disposées sur une surface supérieure et une surface inférieure de la carte de circuit imprimé (130) ;
une pluralité de premiers trous traversants de conduction thermique (143) pénétrant dans la première pastille de conduction thermique (141), la deuxième pastille de conduction thermique (142) et la carte de circuit imprimé (130) ;
un capteur de température (144) qui est disposé sur la surface supérieure ou la surface inférieure de la carte de circuit imprimé (130) et qui est adjacent à la première pastille de conduction thermique (141) ou à la deuxième pastille de conduction thermique (142) ; et
un élément formant pont (145) reliant la barre omnibus correspondante (120) et la première pastille de conduction thermique (141) ou la deuxième pastille de conduction thermique (142).

2. Module de connexion de batterie (100) selon la revendication 1, dans lequel le capteur de température (144) est disposé sur la surface supérieure de la carte de circuit imprimé (130) et est adjacent à la première pastille de conduction thermique (141).

3. Module de connexion de batterie (100) selon la revendication 1 ou 2, dans lequel une première extrémité (145a) de l'élément formant pont (145) est connectée à la première pastille de conduction thermique (141), une seconde extrémité (145b) de l'élément formant pont (145) est connectée à la barre omnibus correspondante (120).

4. Module de connexion de batterie (100) selon l'une quelconque des revendications 1-3, dans lequel l'ensemble de mesure de température comprend en outre un couvercle d'emballage (146) qui est disposé sur la surface supérieure de la carte de circuit imprimé (130).

5. Module de connexion de batterie (100) selon la revendication 4, dans lequel le couvercle d'emballage (146) est utilisé pour emballer au moins partiellement la première pastille de conduction thermique (141), le capteur de température (144) et la première extrémité (145a) de l'élément formant pont (145).

6. Module de connexion de batterie (100) selon l'une quelconque des revendications 2-5 précédentes, dans lequel
la première pastille de conduction thermique (141) est dotée d'une première ouverture de réception (1411),
la première extrémité (145a) de l'élément formant pont (145) est dotée d'une deuxième ouverture de réception (1451),
la première ouverture de réception (1411) coïncide avec la deuxième ouverture de réception (1451) ;
le capteur de température (144) est au moins partiellement positionné dans une plage de la première ouverture de réception (1411) et dans une plage de la deuxième ouverture de réception (1451).

7. Module de connexion de batterie (100) selon l'une quelconque des revendications précédentes, dans lequel
le capteur de température (144) est disposé sur la surface inférieure de la carte de circuit imprimé (130) et est adjacent à la deuxième pastille de conduction thermique (142),
une première extrémité (145a) de l'élément formant pont (145) est reliée à la première pastille de conduction thermique (141), une seconde extrémité (145b) de l'élément formant pont (145) est reliée à la barre omnibus correspondante (120).

8. Module de connexion de batterie (100) selon l'une quelconque des revendications précédentes, dans lequel l'ensemble de mesure de température comprend en outre un couvercle d'emballage (146) qui est disposé sur la surface inférieure de la carte de circuit imprimé (130) et est utilisé pour emballer au moins partiellement la deuxième pastille de conduction thermique (142), le capteur de température (144) et la pluralité de premiers trous traversants de conduction thermique (143).

9. Module de connexion de batterie (100) selon l'une quelconque des revendications précédentes, dans lequel la deuxième pastille de conduction thermique (142) est dotée d'une troisième ouverture de réception (1421) ; dans lequel le capteur de température (144) est au moins partiellement positionné dans une plage de la troisième ouverture de réception (1421).

10. Module de connexion de batterie (100) selon l'une quelconque des revendications précédentes, dans lequel la carte de circuit imprimé (130) est dotée d'un point de connexion électrique, le capteur de température (144) est monté sur le point de connexion électrique ; l'ensemble de mesure de température comprend en outre un second trou traversant de conduction thermique (147) qui pénètre dans le point de connexion électrique et la carte de circuit imprimé (130).

11. Module de connexion de batterie (100) selon la revendication 10, dans lequel le point de connexion électrique est une pastille de soudage (148), le capteur de température (144) est monté sur la pastille de soudage (148) par soudage.

12. Module de connexion de batterie (100) selon la revendication 11, dans lequel l'ensemble de mesure de température comprend en outre une troisième pastille de conduction thermique (149), l'une de la troisième pastille de conduction thermique (149) et de la pastille de soudage (148) étant disposée sur la surface supérieure de la carte de circuit imprimé (130), l'autre de la troisième pastille de conduction thermique (149) et de la pastille de soudage (148) étant disposée sur la surface inférieure de la carte de circuit imprimé (130).

13. Module de connexion de batterie (100) selon la revendication 12, dans lequel le second trou traversant de conduction thermique (147) pénètre en outre dans la troisième pastille de conduction thermique (149).

14. Module de connexion de batterie (100) selon l'une quelconque des revendications précédentes, dans lequel le plateau (110) est doté d'une ouverture (111), l'ouverture (111) coïncide avec la deuxième pastille de conduction thermique (142) et le capteur de température (144).
